# EUROPÄISCHE PATENTSCHRIFT

(11) **EP 3 235 212 B1**
(45) Veröffentlichungstag und Bekanntmachung des Hinweises auf die Patenterteilung: **13.11.2019**
(21) Anmeldenummer: 15801365.6
(22) Anmeldetag: 18.11.2015
(51) Int. Cl.: H04L 29/06, H04L 29/08

(54) **SICHERE UND GEBRAUCHERSPEZIFISCHE DATENNUTZUNG IN KRAFTFAHRZEUGEN**
SECURED AND USER-SPECIFIC USE OF DATA IN A VEHICLE
UTILISATION DE DONNÉES SECURISÉE ET SPÉCIFIQUE D'UN UTILISATEUR DANS UN VÉHICULE

(30) Priorität: 17.12.2014 DE 102014226219
(43) Veröffentlichungstag der Anmeldung: 25.10.2017
(73) Patentinhaber: Bayerische Motoren Werke Aktiengesellschaft, 80809 München (DE)
(72) Erfinder: SALFER, Martin, 80809 München (DE)
(86) Internationale Anmeldenummer: PCT/EP2015/076966
(87) Internationale Veröffentlichungsnummer: WO 2016/096307

(56) Entgegenhaltungen:
- WO-A1-2013/127488
- JP-A- 2011 039 712
- US-A1- 2013 219 170
- US-A1- 2013 317 693

## Beschreibung

Die vorliegende Erfindung betrifft ein Verfahren zur sicheren Datennutzung in einem Kraftfahrzeug und diesbezügliche Vorrichtungen.

Die Druckschrift WO2013/127488-A1 offenbart ein Authentifizierungsverfahren und korrespondierende Software für einen Passagier eines Flugzeugs einer Fluggesellschaft, wobei eine Datenverarbeitungseinrichtung der Fluggesellschaft flugspezifische Authentifizierungsdaten für die Nutzung eines Bordkommunikationsgeräts generiert, und die Authentifizierungsdaten mittels eines Kommunikationsnetzes an ein tragbares Passagiergerät des Passagiers übertragen werden. Die Authentifizierungsdaten ermöglichen die Authentifizierung des Passagiergeräts durch funkgebundene Übertragung der Authentifizierungsdaten an das Bordkommunikationsgerät.

Ferner ist auch die Druckschrift US2013/317693-A1, in der eine Technik der sicheren Datenverwaltung im Bereich der Autovermietung vorgestellt wird, zu nennen.

Aktuell werden ein und dasselbe Kraftfahrzeug durch Carsharing, Kraftfahrzeugvermietungen oder auch Familiennutzung häufiger durch verschiedene Personen genutzt. In modernen Kraftfahrzeugen ist das Verarbeiten privater Daten, wie beispielsweise E-Mails, Navigationsziele und dergleichen und zukünftig auch Garagen-Zugangscodes, App-Store-Passwörter, Fotos, biometrische Daten zur Zugangskontrolle und dergleichen möglich und gängig. Jeder Kraftfahrzeugnutzer kann auf alte, noch im Fahrzeug gespeicherte Daten erneut zugreifen und dadurch Zugriff auf persönliche Daten anderer Kraftfahrzeugnutzer erlangen und diese anderweitig verwenden.

Somit können Fremde Einblick in eigene, persönliche Daten bekommen und somit ist ein Abgriff dieser Daten für andere Fahrzeugnutzer, Insassen und auch Werkstattmitarbeiter möglich. Dadurch kann ein eigenes Kraftfahrzeug nur an sehr vertrauenswürdige Personen ausgeliehen werden, und dies nicht nur bezüglich einer Fahrtüchtigkeit, sondern mittlerweile auch bezüglich einer Datendiskretion der eigenen, persönlichen Daten. Einer Bekanntschaft oder einem Nachbarn das Fahrzeug zu leihen kann somit die persönlichen Daten, inklusive eigener Finanzen und der eigenen Reputation gefährden.

Daher wäre es wünschenswert, eine Möglichkeit bereitzustellen, welche die Nutzung eines Kraftfahrzeuges durch mehrere Personen ermöglicht und dabei den Schutz persönlicher Daten erlaubt.

Es ist Ziel der Erfindung eine Möglichkeit vorzuschlagen, welche zumindest einen Teil der im Stand der Technik bekannten Nachteile vermeidet oder zumindest vermindert.

Die Aufgabe wird erfindungsgemäß gelöst mittels eines Verfahrens gemäß dem Hauptanspruch, sowie mittels Vorrichtungen gemäß nebengeordneten Ansprüchen.

Der Gegenstand des Hauptanspruches betrifft dabei ein Datensicherheitsverfahren zur sicheren Datennutzung in einem Kraftfahrzeug, das Datensicherheitsverfahren aufweisend: Einlesen einer Nutzerauthentifikation eines Kraftfahrzeugnutzers. Prüfen, ob die Nutzerauthentifikation gültig ist. Falls die Nutzerauthentifikation gültig ist: Beziehen eines verschlüsselten persönlichen Datensatzes mittels der Nutzerauthentifikation aus einer kraftfahrzeugexternen Datenbank. Entschlüsseln des verschlüsselten persönlichen Datensatzes. Vorhalten des entschlüsselten persönlichen Datensatzes in einer Vorrichtung des Kraftfahrzeuges. Nach einem Beenden einer Nutzung des Kraftfahrzeuges durch den Kraftfahrzeugnutzer: Auslesen eines weiteren persönlichen Datensatzes aus der Vorrichtung des Kraftfahrzeuges. Verschlüsseln des weiteren persönlichen Datensatzes. Und Übermitteln des verschlüsselten weiteren persönlichen Datensatzes an die kraftfahrzeugexterne Datenbank.

Die Verfahrensschritte können dabei automatisiert ausgeführt werden.

Eine Nutzerauthentifikation im Sinne der Erfindung kann dabei eine Phrase oder auch ein Vorgang sein, mit dem eindeutig auf einen bestimmten Kraftfahrzeugnutzer geschlossen werden kann. Die Nutzerauthentifikation kann dabei als Phrase funktechnisch, kontaktlos oder auch kabelgebunden erfolgen. Die Nutzerauthentifikation kann jedoch auch als sogenannter Hardware-Dongle ausgestaltet sein.

Ein persönlicher Datensatz im Sinne der Erfindung kann dabei kann dabei eine Ansammlung von Daten sein, welche einen persönlichen Charakter aufweisen und somit schützenswert gegen Einsicht und/oder Nutzung Dritter sein können.

Ein weiterer persönlicher Datensatz im Sinne der Erfindung kann dabei identisch mit dem persönlichen Datensatz sein. Es kann jedoch auch möglich sein, dass dieser persönliche Datensatz editiert und/oder modifiziert ist. Dem Grunde nach kann es sich dabei insbesondere um denjenigen Datensatz handeln, der nach einer Nutzung des persönlichen Datensatzes angefallen ist und somit sobald kraftfahrzeugextern gespeichert, den dort gespeicherten persönlichen Datensatz ersetzt.

Der persönliche Datensatz beziehungsweise der weitere persönliche Datensatz werden auf der kraftfahrzeugexternen Datenbank verschlüsselt vorgehalten. Auch ist es möglich, den Datensatz im Kraftfahrzeug derart verschlüsselt vorzuhalten, dass er gegen unbefugtes Auslesen geschützt ist.

Es können für den persönlichen Datensatz beziehungsweise für den weiteren persönlichen Datensatz auch sogenannte Benutzermetaden anfallen. Dies können diejenigen Daten über einen Benutzer sein, welche nicht extra verschlüsselt werden können und im Klartext gehalten werden müssen, wie beispielsweise ein frei wählbarer Name/ID zur Identifikation der Benutzerdatenzugehörigkeit sowie auch eine vom Benutzer verschlüsselte Form eines Benutzerdatenschlüssels beziehungsweise einer Nutzerauthentifikation. In einem Satz an Benutzermetadaten können mehrere Benutzerschlüssel-Chiffrate gespeichert sein. Damit kann der Inhalt für mehrere Schlüssel zugänglich gemacht werden, und die Schlüssel können leichter gewechselt werden, ohne den Inhalt selbst umverschlüsseln zu müssen. Dabei bleibt die Datensicherheit der persönlichen Daten des Kraftfahrzeugnutzers jedoch erhalten.

Ein Benutzerschlüssel kann dabei eine Folge von Bits sein, welche einen asymmetrischen Schlüssel darstellen und einen Benutzer authentifizieren kann.

Ein Benutzerdatenschlüssel kann dabei eine Folge von Bits sein, welcher für einen symmetrischen Kryptoalgorithmus im Fahrzeug benutzt werden kann, zur Verschlüsselung aller Benutzerdaten.

Somit kann der Benutzerdatenschlüssel der Nutzerauthentifikation entsprechen beziehungsweise Teil der Nutzerauthentifikation sein. Der Benutzerschlüssel kann ebenfalls Teil der Nutzerauthentifikation sein.

Ein Benutzerdatenschlüssel-Speicher kann dabei ein Bereich bei den Benutzerdaten sein, welcher den Benutzerdatenschlüssel gut gesichert vorhalten kann. Bei Abmeldung vom System/Kraftfahrzeug kann der Speicher sicher gelöscht werden.

Ein Benutzerpasswort kann eine Folge von Bits sein, welche zur Nutzung des Benutzerschlüssels benötigt werden kann.

Ein Schlüsselträger kann eine Vorrichtung sein, welches einen Benutzerschlüssel beziehungsweise eine Nutzerauthentifikation aufweist. Der Schlüsselträger kann beispielsweise separat bezogen werden, beispielsweise als Token oder auch direkt im Fahrzeugschlüssel integriert erworben werden.

Eine kraftfahrzeugexterne Datenbank im Sinne der Erfindung kann dabei ein Server sein, welcher sich irgendwo außerhalb des Kraftfahrzeuges befindet. Insbesondere befindet sich dieser Server nicht in demjenigen Kraftfahrzeug, in welchem sich der zu nutzende kraftfahrzeuginterne Computer befindet. Solch ein Server kann insbesondere auch eine Serverfarm und/oder eine Cloud sein.

Ein Verschlüsseln im Sinne der Erfindung kann dabei ein chiffrieren mit einem gängigen und als sicher geltenden Verschlüsselungsverfahren sein.

Durch die erfindungsgemäße Lehre wird der Vorteil erreicht, dass sich persönliche Daten sicher in einem Kraftfahrzeug nutzen lassen.

Ein weiterer Vorteil ist, dass sich diese persönlichen Daten auf einfache Weise sicher aufbewahren lassen.

Der Gegenstand eines nebengeordneten Anspruches betrifft dabei eine Datensicherheitsvorrichtung für ein Kraftfahrzeug, die Datensicherheitsvorrichtung aufweisend: Ein Einlesemittel, zum Einlesen einer Nutzerauthentifikation eines Kraftfahrzeugnutzers. Ein Prüfmittel, zum Prüfen, ob die Nutzerauthentifikation gültig ist. Eine Empfangsvorrichtung, zum Beziehen eines verschlüsselten persönlichen Datensatzes mittels der Nutzerauthentifikation aus einer kraftfahrzeugexternen Datenbank. Ein Entschlüsselungsmittel, zum Entschlüsseln des verschlüsselten persönlichen Datensatzes. Ein Auslesemittel, zum Auslesen eines weiteren persönlichen Datensatzes. Ein Verschlüsselungsmittel, zum Verschlüsseln des weiteren persönlichen Datensatzes. Und eine Sendevorrichtung, zum Übermitteln des verschlüsselten weiteren persönlichen Datensatzes an die kraftfahrzeugexterne Datenbank. Und dabei ist die Datensicherheitsvorrichtung dazu eingerichtet, ein erfindungsgemäßes Datensicherheitsverfahren auszuführen.

Durch die erfindungsgemäße Lehre wird der Vorteil erreicht, dass persönliche Daten bei einer Kraftfahrzeugnutzung nur dem Eigentümer dieser Daten selbst zugänglich gemacht werden können.

Der Gegenstand eines weiteren nebengeordneten Anspruches betrifft dabei ein Kraftfahrzeug, aufweisend eine erfindungsgemäße Datensicherheitsvorrichtung.

Durch die erfindungsgemäße Lehre wird der Vorteil erreicht, dass beliebige Nutzer beliebige erfindungsgemäße Kraftfahrzeuge nutzen können und dabei sicher sein können, dass ihre persönlichen Daten nur ihnen selbst zugänglich gemacht werden.

Der Gegenstand eines weiteren nebengeordneten Anspruches betrifft dabei ein Computerprogrammprodukt für eine erfindungsgemäße Datensicherheitsvorrichtung, welche nach einem erfindungsgemäßen Datensicherheitsverfahren betreibbar ist.

Der Gegenstand eines weiteren nebengeordneten Anspruches betrifft dabei einen Datenträger aufweisend ein erfindungsgemäßes Computerprogrammprodukt.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mitumfasst, soweit der Kontext dies nicht explizit ausschließt. Etwaige Verfahrensschritte können, soweit der Kontext dies nicht explizit ausschließt, automatisiert ausgeführt werden.

Nachfolgend werden weitere exemplarische Ausgestaltungen des erfindungsgemäßen Verfahrens erläutert.

Entsprechend einer ersten exemplarischen Ausgestaltung weist das Datensicherheitsverfahren ferner auf, dass das Entschlüsseln des verschlüsselten persönlichen Datensatzes mittels der Nutzerauthentifikation oder eines Teiles der Nutzerauthentifikation erfolgt.

Insbesondere bei einer Ausgestaltung der Nutzerauthentifikation als Hardware-Dongle, wie beispielsweise auf einem persönlichen Kraftfahrzeugschlüssel des Kraftfahrzeugnutzers kann das Entschlüsseln mittels der Nutzerauthentifikation oder eines Teiles dieser erfolgen.

Diese Ausgestaltung weist den Vorteil auf, dass die persönliche Nutzerauthentifikation auf einfache Weise zur Entschlüsselung selbst herangezogen werden kann, wodurch die Nutzung des persönlichen Datensatzes durch den betreffenden Kraftfahrzeugnutzer vereinfacht ermöglicht werden kann, ohne dabei die Datensicherheit signifikant zu verringern.

Entsprechend einer weiteren exemplarischen Ausgestaltung weist das Datensicherheitsverfahren ferner auf, dass das Entschlüsseln des verschlüsselten persönlichen Datensatzes mittels eines persönlichen Schlüssels des Nutzers oder einer Kombination aus dem persönlichen Schlüssel und der Nutzerauthentifikation erfolgt.

Diese Ausgestaltung weist den Vorteil auf, dass die Datensicherheit der persönlichen Daten erhöht werden kann.

Entsprechend einer weiteren exemplarischen Ausgestaltung weist das Datensicherheitsverfahren ferner auf, dass das Verschlüsseln des weiteren persönlichen Datensatzes mittels der Nutzerauthentifikation oder eines Teiles der Nutzerauthentifikation erfolgt.

Diese Ausgestaltung weist den Vorteil auf, dass die persönliche Nutzerauthentifikation auf einfache Weise zur Verschlüsselung selbst herangezogen werden kann, wodurch die Nutzung des weiteren persönlichen Datensatzes durch den betreffenden Kraftfahrzeugnutzer vereinfacht ermöglicht werden kann, ohne dabei die Datensicherheit signifikant zu verringern.

Entsprechend einer weiteren exemplarischen Ausgestaltung weist das Datensicherheitsverfahren ferner auf, dass das Verschlüsseln des weiteren persönlichen Datensatzes mittels eines persönlichen Schlüssels des Nutzers oder einer Kombination aus dem persönlichen Schlüssel und der Nutzerauthentifikation erfolgt.

Diese Ausgestaltung weist den Vorteil auf, dass die Datensicherheit der persönlichen Daten erhöht werden kann.

Entsprechend einer weiteren exemplarischen Ausgestaltung weist das Datensicherheitsverfahren ferner auf, dass der persönliche Datensatz und der weitere persönliche Datensatz mindestens eine Information aus einer Informationsgruppe aufweist. Und dabei weist die Informationsgruppe auf: Eine elektronische-Nachricht-Information, eine Navigation-Information, eine Ticket-Information, eine Multimedia-Information, eine Notizinformation, eine Applikationsinformation, eine Adressbuch-Information und eine persönliche Information bezüglich des Kraftfahrzeugnutzers.

Diese Ausgestaltung weist den Vorteil auf, dass eine große Bandbreite an eigenen persönlichen Informationen, Daten, sowie Anwendungen sicher genutzt werden kann.

Entsprechend einer ersten exemplarischen Ausgestaltung weist die Datensicherheitsvorrichtung ferner ein Übertragungsmittel auf, zum Übertragen des entschlüsselten persönlichen Datensatzes an eine Vorrichtung des Kraftfahrzeuges. Und dabei ist das Auslesemittel dazu eingerichtet, den weiteren persönlichen Datensatz von der Vorrichtung des Kraftfahrzeuges auszulesen.

Diese Ausgestaltung weist den Vorteil auf, dass eine einfache und somit kostengünstige Nachrüstbarkeit der Datensicherheitsvorrichtung in bereits bestehende Kraftfahrzeuge ermöglicht werden kann.

Ein weiterer Vorteil dieser Ausgestaltung ist, dass eine Flexibilisierung der zu nutzenden Vorrichtungen für die Nutzung des persönlichen Datensatzes erreicht werden kann.

Entsprechend einer weiteren exemplarischen Ausgestaltung weist die Datensicherheitsvorrichtung ferner ein Vorhaltemittel auf, zum Vorhalten des entschlüsselten persönlichen Datensatzes. Und dabei ist das Auslesemittel dazu eingerichtet, den weiteren persönlichen Datensatz von dem Vorhaltemittel auszulesen.

Diese Ausgestaltung weist den Vorteil auf, dass eine kompakte und somit kostengünstige Datensicherheitsvorrichtung für neue Kraftfahrzeugmodelle ermöglicht werden kann.

Die Erfindung erlaubt es somit, den Schutz privater Daten durch Verschlüsselung der Daten mit einem anwenderindividuellen Schlüssel zu gewährleisten. Es kann somit für jeden Kraftfahrzeugnutzer ein eigener persönlicher Datensatz und ein zugehöriger Schlüssel gebildet werden, um die Daten des jeweiligen Kraftfahrzeugnutzers sichert vorhalten und auch sicher nutzen zu können.

Persönliche Daten werden in entsprechenden Vorrichtungen nur noch verschlüsselt abgelegt oder zweckgebunden, temporär nutzbar gemacht. Der dazu nötige kryptografische Schlüssel kann dabei auf einem privaten Gegenstand abgelegt werden, dem Datenschlüssel beziehungsweise der Nutzerauthentifikation. Jeder Anwender kann zur Bedienung eines Kraftfahrzeuges einen eigenen Datenschlüssel erhalten. Dieser kann bei der Erstbenutzung initialisiert werden. Als Datenschlüssel eigenen sich funkfähige Tokens, wie sie sich in Armbändern oder Brieftaschen auch integrieren und transportieren lassen.

Der Datenschlüsse kann auch auf dem Handy, wie beispielsweise in einer App vorgehalten werden und über Funkschnittstellen wie NFC oder WLAN an das Kraftfahrzeug und der Cloud übermittelt werden.

In einer erhöhten Sicherungsstufe verlässt der Datenschlüssel niemals das entsprechende Gerät beziehungsweise die Nutzerauthentifikation, und es werden alle zu verschlüsselnden Daten direkt durch das entsprechende Gerät geleitet. Das Gerät, wie beispielsweise ein Smartphone, eine Smartwatch, ein sogenanntes Wearable, ein Fahrzeugschlüssel und dergleichen kann mit einer schnellen Datenanbindung zum Kraftfahrzeug verbunden werden. Dies kann beispielsweise entweder direkt durch einen sogenannten Snap-In-Adapter erfolgen, welcher USB mit mindestens 12 Mb/s, vorzugsweise mit 400 Mb/s oder schneller leisten kann, oder über einen schnellen WLAN-Standard mit mindestens 100 Mb/s maximaler Datenübertragungsrate. Dabei kann jede E-Mail, jedes Navigationsziel und dergleichen als persönlicher Datensatz, als auch jede Authentifizierung gegenüber Cloud-Diensten transparent über eine Gerätedurchleitung erfolgen, wodurch die Datensicherheit noch weiter erhöht werden kann.

Nachfolgend erfolgen einige Beispielszenarien. Diese erheben keinen Anspruch auf Vollständigkeit beziehungsweise Abgeschlossenheit der Erfindungsidee, sondern sind lediglich dazu gedacht, dem Leser eine einfachere, erste Anwendungsübersicht zu erlauben.

### Szenario 1: Autoverleih an den Nachbarn

Der Fahrzeughalter nutzt für seine Vertriebsfahrten regelmäßig E-Mail, Navigation und Ticketkauf im Fahrzeug. Dazu hat er auch seine persönlichen Daten im Fahrzeug eingetragen um auch mobil auf die Dienste zugreifen zu können. Eines Tages bittet der Nachbar das Auto auszuleihen um eine dringliche Fahrt zu erledigen. Der Halter willigt der Gefälligkeit ein und reicht ihm den Autoschlüssel. Dabei ist er sich allerdings seiner persönlichen Daten im Fahrzeug bewusst und möchte vermeiden dass der Nachbar seine E-Mails lesen kann oder seine früher getätigten Transaktionen oder Navigationspunkte einsehen kann. Mit der vorliegenden Erfindung kann der Fahrzeughalter sicher sein, dass sein Nachbar während der Nutzung des Kraftfahrzeuges keinen Zugriff auf diesen persönlichen Datensatz erhalten wird. Der Nachbar kann das Fahrzeug nutzen und seine Fahrt erledigen. Dabei kann dieser selbst auch alle Dienste, selbst Navigations- und Ticketdienste nutzen. Allerdings kann er dabei nicht die privaten Daten des Fahrzeughalters einsehen oder gar verändern, da dessen Daten mit dessen Datenschlüssel/Nutzerauthentifizierung verschlüsselt sind und somit nicht eingesehen werden können. Nach der Fahrt gibt der Fahrer den Fahrzeugschlüssel wieder zurück an den Fahrzeughalter. Der Halter macht darauf eine weitere Fahrt, hat dabei seinen Datenschlüssel mit dabei, und kann wie gewohnt auf seine E-Mail- und Navigationsdaten zurückgreifen.

### Szenario 2: Datensynchronisation über mehrere Fahrzeuge

Der Fahrzeugnutzer nutzt täglich Fahrzeug 1 und hält darauf seine privaten Daten als privaten Datensatz vor. Eines Tages ist Fahrzeug 1 bereits anderweitig genutzt, ein Familienmitglied befindet sich damit auf Reise. So ist der Fahrzeugnutzer gezwungen Fahrzeug 2 zu nutzen, wie beispielsweise den Zweitwagen der Familie oder eines Nachbarn. Der Fahrzeugnutzer steigt in Fahrzeug 2 mitsamt seinem Datenschlüssel. Das Fahrzeug kopiert den zu diesem Datenschlüssel gehörigen persönlichen Datensatz, welcher normalerweise in dem Fahrzeug 1 genutzt wird, aus einer kraftfahrzeugexternen Datenbank wie beispielsweise einer Cloud beziehungsweise aus dem Fahrzeug 1 in das Fahrzeug 2. Der Fahrzeugnutzer kann somit die IT-Systeme auf Fahrzeug 2 in gleicher Weise nutzen wie er es auf Fahrzeug 1 gewohnt ist, soweit diese in Fahrzeug 2 existieren.

### Szenario 3: Initialisieren eines Schlüsselträgers

Zunächst wird der Benutzer A im Fahrzeug neu angelegt. Danach generiert das Fahrzeug einen zufälligen Benutzerdatenschlüssel (mit hoher Entropie) als Teil der Nutzerauthentifikation in dem fahrzeugseitigen Benutzerdatenschlüsselspeicher. Das Fahrzeug fängt an jegliche Benutzerdaten, beispielsweise transparent, mit dem Benutzerdatenschlüssel zu verschlüsseln. Nun kann der Schlüsselträger mit dem Fahrzeug verbunden werden. Der Schlüsselträger generiert einen asymmetrischen Benutzerschlüssel für Benutzer A als denjenigen Teil der Nutzerauthentifikation, welcher für die Ver- und Entschlüsselung benötigt wird. Der Schlüsselträger überträgt einen öffentlichen Benutzerschlüsselanteil an das Fahrzeug. Jegliche Verbindung zwischen den Geräten wird dabei mittels einem TLS_ECDHE_ECDSA_WITH_AES_256_GCM_SHA384 für ein sogenanntes "Perfect Forward Secrecy" abgewickelt. In dem Fahrzeug wird der Benutzerdatenschlüssel mit dem öffentlichen Benutzerschlüssel verschlüsselt und die verschlüsselte Form wird in den Benutzermetadaten mit abgelegt. Der Benutzer wählt ein Benutzerpasswort. Alternativ kann das Passwort leer gelassen werden und somit hängt dann die Sicherheit des persönlichen Datensatzes allein von den Möglichkeiten der Hardware ab. Das Benutzerpasswort kann in Verbindung mit beispielsweise scrypt/PBKDF2 benutzt werden, um den Benutzerschlüssel auf dem Schlüsselträger zu verschlüsseln. Optional kann das Fahrzeug dem Benutzer anbieten, den Benutzerdatenschlüssel verschlüsselt in einem besonders geschützten Bereich des Fahrzeuges zu hinterlegen, welcher im Notfall mit entsprechend sorgfältiger Authentifizierung gegenüber dem Kraftfahrzeughersteller wieder hervorgeholt werden könnte. Der Benutzerdatenschlüssel verlässt das Fahrzeug nur verschlüsselt. Je nach Präferenz des Benutzers kann der Benutzerdatenschlüssel mit dem Benutzerpasswort oder relativ nahe liegenden persönlichen Informationen wie beispielsweise Geburtsdatum, Hundename und dergleichen verschlüsselt werden und somit in der kraftfahrzeugexternen Datenbank nur in benutzerverschlüsselter Form abgelegt werden. Der Betreiber der kraftfahrzeugexternen Datenbank selbst kann somit die Daten nicht entschlüsseln. Es muss immer noch das geheime Wissen beziehungsweise das Benutzerpasswort von dem Benutzer kommen. Optional kann der Schlüssel mit einem in dem Fahrzeugbrief (Zulassungsbescheinigung Teil 2) aufgedruckten Passwort verschlüsselt werden, so dass der Fahrzeugbrief als ein Art Master-Schlüssel genutzt werden kann. Dies empfiehlt sich bei Kraftfahrzeugleasing/-finanzierung jedoch abzuwählen, um nicht dem Leasinggeber vertrauen zu müssen, da dieser bei Leasing/Finanzierung in der Regel den Fahrzeugbrief während der Vertragslaufzeit selbst verwahrt. Optional kann das System den Benutzer darauf hinweisen, einen Backup-Schlüssel separat zu erstellen. Das System ist nun einsatzbereit. Alle Benutzerdaten werden transparent mit dem Benutzerdatenschlüssel verschlüsselt. Alle Benutzerdaten sowie auch die Benutzermetadaten können dabei mit der kraftfahrzeugexternen Datenbank synchron gehalten, indem der weitere persönliche Datensatz den persönlichen Datensatz auf der kraftfahrzeugexternen Datenbank ersetzt.

Alternativ kann auch der Benutzerdatenschlüssel direkt auf dem Schlüsselträger gespeichert werden und ins Fahrzeug geladen werden.

Alternativ kann der Benutzerdatenschlüssel auch symmetrisch verschlüsselt werden und der symmetrische Schlüssel dazu auf dem Schlüsselträger vorgehalten werden.

Alternativ kann der Benutzerdatenschlüssel auch nur rein mit dem Benutzerpasswort verschlüsselt werden, sodass keinerlei extra Hardware nötig ist. Dann muss der Schlüsselträger aber für jede Herausgabe beispielsweise mit einem Taster auf dem Schlüsselträger selbst angestoßen werden, um sicher gegen Trojanern zu sein, welche ansonsten den Schlüssel direkt um den Benutzerschlüssel anfragen könnten.

Soll ein weiterer Schlüssel für einen Nutzer B angelegt werden, kann in dem Fahrzeug das Chiffrat B ebenfalls in den Benutzermetadaten abgespeichert werden, parallel zu dem Chiffrat A des Schlüsselträgers A.

Soll ein Schlüssel gelöscht werden, wählt der Benutzer einen Schlüssel aus den Benutzermetadaten aus, der zu löschen ist. Sofern danach noch mindestens ein Benutzerdatenschlüssel-Chiffrat für eine zukünftige Nutzung verbleibt, das betreffende Benutzerdatenschlüssel-Chiffrat aus den Benutzermetadaten sicher gelöscht. Somit müssen betreffende Vorrichtungen niemals Schlüssel transferieren. Es reicht durch hinzufügen und löschen in den Benutzermetadaten aus, die Berechtigung somit effektiv zu übertragen.

Optional kann der geheime Schlüssel eines asymmetrischen Schlüssels niemals den Schlüsselträger verlassen. Der geheime Schlüssel bleibt somit ausschließlich auf dem Schlüsselträger, von Beginn seiner Generierung bis zur Zerstörung/Löschung. Optional kann der Benutzerdatenschlüssel niemals das Fahrzeug beziehungsweise den Benutzerdatenschlüssel-Speicher verlassen. Es sei denn der Kraftfahrzeugnutzer wünscht dies explizit. Dann kann der Benutzerdatenschlüssel beispielsweise lediglich gekapselt in einem Schlüsselträger oder verschlüsselt in einem Chiffrat für die kraftfahrzeugexterne Datenbank vorgehalten werden. Es sei denn, der Benutzer wünscht explizit und außertourlich eine vollständige Klartexthaltung des Schlüssels im Backend für Notfallzwecke.

Optional kann der persönliche Datensatz des Nutzers des Fahrzeuges mit der kraftfahrzeugexternen Datenbank, wie beispielsweise einer Cloud, synchron gehalten werden Damit können bei einem plötzlichen Fahrzeugverlust immer noch alle Daten wieder erhalten werden, oder alternativ auf einem anderen Kraftfahrzeug eingespielt werden und dort weiter genutzt werden, insbesondere auch bei einem Vermietfahrzeug wie bei DriveNow oder einem Leasingfahrzeug.

Die Erfindung wird nachfolgend eingehender an Hand der Figuren erläutert werden. In diesen zeigen:
Fig. 1 eine schematische Darstellung eines vorgeschlagenen Verfahrens gemäß einer beispielhaften Ausgestaltung der Erfindung;
Fig. 2 eine schematische Darstellung eines vorgeschlagenen Verfahrens gemäß einer weiteren beispielhaften Ausgestaltung der Erfindung;
Fig. 3 eine schematische Darstellung einer vorgeschlagenen Vorrichtung gemäß einer weiteren beispielhaften Ausgestaltung der Erfindung; und
Fig. 4 eine schematische Darstellung einer vorgeschlagenen Vorrichtung gemäß einer weiteren beispielhaften Ausgestaltung der Erfindung.

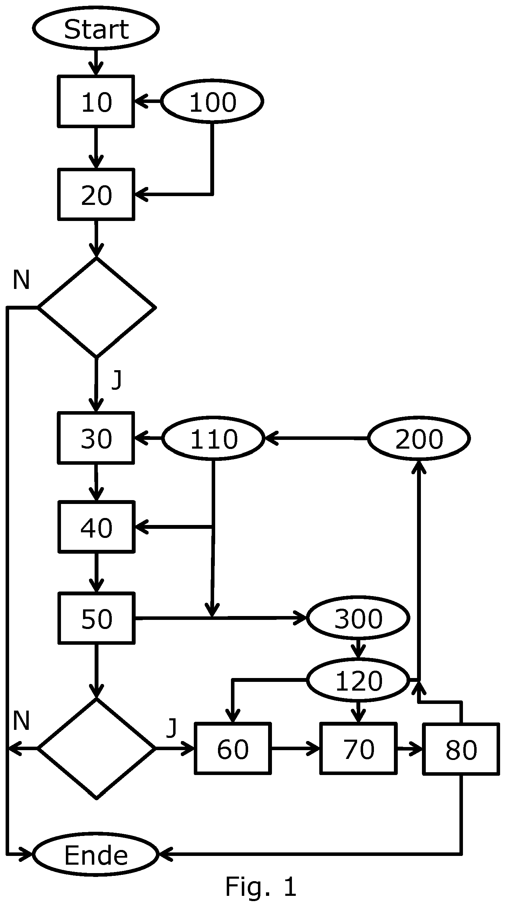

Fig. 1 zeigt eine schematische Darstellung eines vorgeschlagenen Verfahrens gemäß einer beispielhaften Ausgestaltung der Erfindung.

Dabei zeigt Fig. 1 ein Datensicherheitsverfahren zur sicheren Datennutzung in einem Kraftfahrzeug, das Datensicherheitsverfahren aufweisend: Einlesen 10 einer Nutzerauthentifikation 100 eines Kraftfahrzeugnutzers. Prüfen 20, ob die Nutzerauthentifikation 100 gültig ist. Falls die Nutzerauthentifikation gültig ist: Beziehen 30 eines verschlüsselten persönlichen Datensatzes 110 mittels der Nutzerauthentifikation 100 aus einer kraftfahrzeugexternen Datenbank 200. Entschlüsseln 40 des verschlüsselten persönlichen Datensatzes 110. Vorhalten 50 des entschlüsselten persönlichen Datensatzes 110 in einer Vorrichtung 300 des Kraftfahrzeuges. Nach einem Beenden einer Nutzung des Kraftfahrzeuges durch den Kraftfahrzeugnutzer: Auslesen 60 eines weiteren persönlichen Datensatzes 120 aus der Vorrichtung 300 des Kraftfahrzeuges. Verschlüsseln 70 des weiteren persönlichen Datensatzes 120. Und Übermitteln 80 des verschlüsselten weiteren persönlichen Datensatzes 120 an die kraftfahrzeugexterne Datenbank 200.

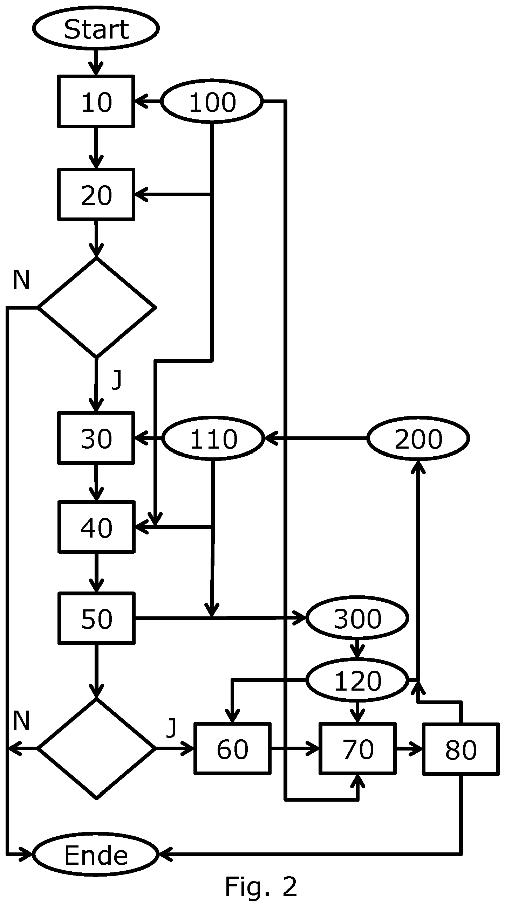

Fig. 2 zeigt eine schematische Darstellung eines vorgeschlagenen Verfahrens gemäß einer weiteren beispielhaften Ausgestaltung der Erfindung.

Dabei zeigt Fig. 2 eine schematische Darstellung eines gegenüber des Verfahrens aus Fig. 1 erweiterten Verfahrens. Das zuvor zu Fig. 1 Gesagte gilt entsprechend für Fig. 2 fort.

Wie Fig. 2 entnommen werden kann, weist das Datensicherheitsverfahren darüber hinaus auf, dass das Entschlüsseln 40 des verschlüsselten persönlichen Datensatzes 110 mittels der Nutzerauthentifikation 100 oder eines Teiles der Nutzerauthentifikation 100 erfolgt. Alternativ kann das Entschlüsseln 40 des verschlüsselten persönlichen Datensatzes 110 mittels eines persönlichen Schlüssels des Nutzers oder einer Kombination aus dem persönlichen Schlüssel und der Nutzerauthentifikation 100 erfolgen.

Ferner weist das Datensicherheitsverfahren darüber hinaus auf, dass das Verschlüsseln 70 des weiteren persönlichen Datensatzes 120 mittels der Nutzerauthentifikation 100 oder eines Teiles der Nutzerauthentifikation 100 erfolgt.

Alternativ kann das Verschlüsseln 70 des weiteren persönlichen Datensatzes 120 mittels eines persönlichen Schlüssels des Nutzers oder einer Kombination aus dem persönlichen Schlüssel und der Nutzerauthentifikation 100 erfolgen.

Der persönliche Datensatz 110 und der weitere persönliche Datensatz 120 können dabei mindestens eine Information aus einer Informationsgruppe aufweisen. Und dabei kann die Informationsgruppe aufweisen: Eine elektronische-Nachricht-Information, eine Navigation-Information, eine Ticket-Information, eine Multimedia-Information, eine Notizinformation, eine Applikationsinformation, eine Adressbuch-Information und eine persönliche Information bezüglich des Kraftfahrzeugnutzers.

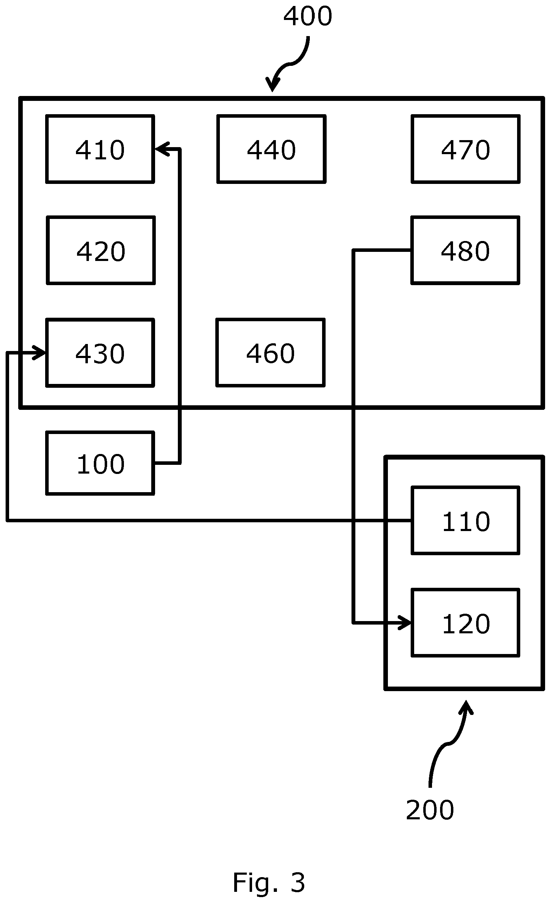

Fig. 3 zeigt eine schematische Darstellung einer vorgeschlagenen Vorrichtung gemäß einer weiteren beispielhaften Ausgestaltung der Erfindung.

Dabei zeigt Fig. 3 eine schematische Darstellung einer Datensicherheitsvorrichtung 400 für ein Kraftfahrzeug, die Datensicherheitsvorrichtung aufweisend: Ein Einlesemittel 410, zum Einlesen 10 einer Nutzerauthentifikation 100 eines Kraftfahrzeugnutzers. Ein Prüfmittel 420, zum Prüfen 20, ob die Nutzerauthentifikation 100 gültig ist. Eine Empfangsvorrichtung 430, zum Beziehen 30 eines verschlüsselten persönlichen Datensatzes 110 mittels der Nutzerauthentifikation 100 aus einer kraftfahrzeugexternen Datenbank 200. Ein Entschlüsselungsmittel 440, zum Entschlüsseln 40 des verschlüsselten persönlichen Datensatzes 110. Ein Auslesemittel 460, zum Auslesen 60 eines weiteren persönlichen Datensatzes 120. Ein Verschlüsselungsmittel 470, zum Verschlüsseln 70 des weiteren persönlichen Datensatzes 120. Und eine Sendevorrichtung 480, zum Übermitteln 80 des verschlüsselten weiteren persönlichen Datensatzes 120 an die kraftfahrzeugexterne Datenbank 200. Und dabei ist die Datensicherheitsvorrichtung 400 dazu eingerichtet, ein erfindungsgemäßes Datensicherheitsverfahren auszuführen.

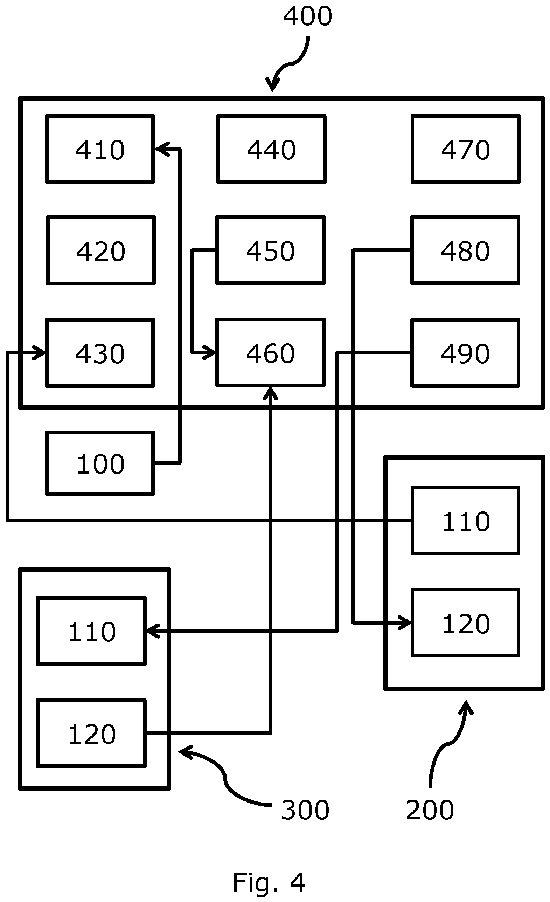

Fig. 4 zeigt eine schematische Darstellung einer vorgeschlagenen Vorrichtung gemäß einer weiteren beispielhaften Ausgestaltung der Erfindung.

Dabei zeigt Fig. 4 eine schematische Darstellung einer gegenüber der Vorrichtung aus Fig. 3 erweiterten Vorrichtung. Das zuvor zu Fig. 3 Gesagte gilt entsprechend für Fig. 4 fort.

Wie Fig. 4 entnommen werden kann, weist die Datensicherheitsvorrichtung darüber hinaus ein Übertragungsmittel 490 auf, zum Übertragen des entschlüsselten persönlichen Datensatzes 110 an eine Vorrichtung 300 des Kraftfahrzeuges. Und dabei ist das Auslesemittel 460 dazu eingerichtet, den weiteren persönlichen Datensatz 120 von der Vorrichtung 300 des Kraftfahrzeuges auszulesen.

Ferner weist die Datensicherheitsvorrichtung darüber hinaus ein Vorhaltemittel 450 auf, zum Vorhalten 50 des entschlüsselten persönlichen Datensatzes 110. Und dabei ist das Auslesemittel 460 dazu eingerichtet, den weiteren persönlichen Datensatz 120 von dem Vorhaltemittel 450 auszulesen. Der Übersichtlichkeit halber ist im Beispiel der Fig. 4 darauf verzichtet worden, den persönlichen Datensatz 110, sowie den weiteren persönlichen Datensatz 120 jeweils als Block in dem Vorhaltemittel 450 darzustellen.

Im Beispiel der Fig. 4 sind somit zwei mögliche Ausgestaltungen zum Vorhalten des persönlichen Datensatzes 110, sowie des weiteren persönlichen Datensatzes 120 vorgesehen. Eine der beiden Vorhaltemöglichkeiten zu realisieren, ist jedoch durchaus ausreichend. Dennoch kann es aus Kostengründen, Komfortgründen, Modularität, Nachrüstbarkeit und dergleichen möglich sein, dass beide Ausgestaltungen gemeinsam zur Realisierung einer Vorhaltemöglichkeit für die persönlichen Datensätze 110, 120 herangezogen werden. Somit können die persönlichen Datensätze 110, 120 in der Datensicherheitsvorrichtung 400 und/oder in einer anderen Vorrichtung 300 des Kraftfahrzeuges vorgehalten und auch genutzt werden.

Die Erfindungsidee kann wie folgt zusammengefasst werden. Es wird ein Verfahren und diesbezügliche Vorrichtungen bereitgestellt, wodurch es möglich werden kann, persönliche Daten, insbesondere persönliche Nutzerdaten, gegen unautorisierten Zugang gesichert Kraftfahrzeugextern vorzuhalten und nutzerabhängig in ein von dem Eigentümer der persönlichen Daten genutzten Kraftfahrzeug zu importieren, dort erst zu dechiffrieren, in diesem Kraftfahrzeug zu nutzen, und nach Beendigung der Nutzung des Kraftfahrzeuges erneut zu chiffrieren und erneut kraftfahrzeugextern gesichert aufzubewahren. Dadurch ist es möglich, dass beliebige Nutzer beliebige Kraftfahrzeuge nutzen können und dabei sicher sein können, dass ihre persönlichen Daten nur ihnen selbst zugänglich gemacht werden.

### Bezugszeichenliste

- 10: Einlesen einer Nutzerauthentifikation
- 20: Prüfen, ob die Nutzerauthentifikation gültig ist
- 30: Beziehen eines verschlüsselten persönlichen Datensatzes
- 40: Entschlüsseln des verschlüsselten persönlichen Datensatzes
- 50: Vorhalten des entschlüsselten persönlichen Datensatzes
- 60: Auslesen eines weiteren persönlichen Datensatzes
- 70: Verschlüsseln des weiteren persönlichen Datensatzes
- 80: Übermitteln des verschlüsselten weiteren persönlichen Datensatzes
- 100: Nutzerauthentifikation
- 110: persönlicher Datensatz
- 120: weiterer persönlicher Datensatz
- 200: kraftfahrzeugexterne Datenbank
- 300: Vorrichtung eines Kraftfahrzeuges
- 400: Datensicherheitsvorrichtung
- 410: Einlesemittel
- 420: Prüfmittel
- 430: Empfangsvorrichtung
- 440: Entschlüsselungsmittel
- 450: Vorhaltemittel
- 460: Auslesemittel
- 470: Verschlüsselungsmittel
- 480: Sendevorrichtung
- 490: Übertragungsmittel

## Patentansprüche

1. Ein Datensicherheitsverfahren zur sicheren Datennutzung in einem Kraftfahrzeug, das Datensicherheitsverfahren aufweisend:
- Einlesen (10) einer Nutzerauthentifikation (100) eines Kraftfahrzeugnutzers,
- Prüfen (20), ob die Nutzerauthentifikation (100) gültig ist, wobei
- falls die Nutzerauthentifikation (100) gültig ist:
- Beziehen (30) eines verschlüsselten persönlichen Datensatzes (110) mittels der Nutzerauthentifikation (100) aus einer kraftfahrzeugexternen Datenbank (200), wobei der persönliche Datensatz (110) auf der kraftfahrzeugexternen Datenbank (200) derart verschlüsselt vorgehalten wird, dass er lediglich basierend auf der gültigen Nutzerauthentifikation (100) entschlüsselt werden kann,
- Entschlüsseln (40) des verschlüsselten persönlichen Datensatzes (110) basierend auf der gültigen Nutzerauthentifikation (100),
- Vorhalten (50) des entschlüsselten persönlichen Datensatzes (110) in einer Vorrichtung (300) des Kraftfahrzeuges,
- nach einem Beenden einer Nutzung des Kraftfahrzeuges durch den Kraftfahrzeugnutzer:
- Auslesen (60) eines weiteren persönlichen Datensatzes (120) aus der Vorrichtung (300) des Kraftfahrzeuges,
- Verschlüsseln (70) des weiteren persönlichen Datensatzes (120) basierend auf der gültigen Nutzerauthentifikation (100), und
- Übermitteln (80) des verschlüsselten weiteren persönlichen Datensatzes (120) an die kraftfahrzeugexterne Datenbank (200).

2. Das Datensicherheitsverfahren gemäß Anspruch 1, wobei das Entschlüsseln (40) des verschlüsselten persönlichen Datensatzes (110) mittels einer Kombination aus dem persönlichen Schlüssel und der Nutzerauthentifikation (100) erfolgt.

3. Das Datensicherheitsverfahren gemäß irgendeinem der vorhergehenden Ansprüche 1 bis 2, wobei das Verschlüsseln (70) des weiteren persönlichen Datensatzes (120) mittels einer Kombination aus dem persönlichen Schlüssel und der Nutzerauthentifikation (100) erfolgt.

4. Das Datensicherheitsverfahren gemäß irgendeinem der vorhergehenden Ansprüche, wobei
der persönliche Datensatz (110) und der weitere persönliche Datensatz (120) mindestens eine Information aus einer Informationsgruppe aufweist, und wobei die Informationsgruppe aufweist:
- eine elektronische-Nachricht-Information,
- eine Navigation-Information,
- eine Ticket-Information,
- eine Multimedia-Information,
- eine Notizinformation,
- eine Applikationsinformation,
- eine Adressbuch-Information, und
- eine persönliche Information bezüglich des Kraftfahrzeugnutzers.

5. Eine Datensicherheitsvorrichtung (400) für ein Kraftfahrzeug, die Datensicherheitsvorrichtung (400) aufweisend:
- ein Einlesemittel (410), zum Einlesen (10) einer Nutzerauthentifikation (100) eines Kraftfahrzeugnutzers,
- ein Prüfmittel (420), zum Prüfen (20), ob die Nutzerauthentifikation (100) gültig ist,
- eine Empfangsvorrichtung (430), zum Beziehen (30) eines verschlüsselten persönlichen Datensatzes (110) mittels der Nutzerauthentifikation (100) aus einer kraftfahrzeugexternen Datenbank (200), wobei der persönliche Datensatz (110) auf der kraftfahrzeugexternen Datenbank (200) derart verschlüsselt vorgehalten wird, dass er lediglich basierend auf der gültigen Nutzerauthentifikation (100) entschlüsselt werden kann,
- ein Entschlüsselungsmittel (440), zum Entschlüsseln (40) des verschlüsselten persönlichen Datensatzes (110), basierend auf der gültigen Nutzerauthentifikation (100),
- ein Auslesemittel (460), zum Auslesen (60) eines weiteren persönlichen Datensatzes (120),
- ein Verschlüsselungsmittel (470), zum Verschlüsseln (70) des weiteren persönlichen Datensatzes (120), basierend auf der gültigen Nutzerauthentifikation (100), und
- eine Sendevorrichtung (480), zum Übermitteln (80) des verschlüsselten weiteren persönlichen Datensatzes (120) an die kraftfahrzeugexterne Datenbank (200), und
wobei die Datensicherheitsvorrichtung (400) dazu eingerichtet ist, ein Datensicherheitsverfahren gemäß irgendeinem der vorhergehenden Ansprüche auszuführen.

6. Die Datensicherheitsvorrichtung (400) gemäß Anspruch 5, die Datensicherheitsvorrichtung (400) ferner aufweisend:
- ein Übertragungsmittel (490), zum Übertragen des entschlüsselten persönlichen Datensatzes (110) an eine Vorrichtung (300) des Kraftfahrzeuges, und
wobei das Auslesemittel (460) dazu eingerichtet ist,
den weiteren persönlichen Datensatz (120) von der Vorrichtung (300) des Kraftfahrzeuges auszulesen.

7. Die Datensicherheitsvorrichtung (400) gemäß Anspruch 5 oder 6, die Datensicherheitsvorrichtung (400) ferner aufweisend:
- ein Vorhaltemittel (450), zum Vorhalten (50) des entschlüsselten persönlichen Datensatzes (110), und
wobei das Auslesemittel (460) dazu eingerichtet ist,
den weiteren persönlichen Datensatz (120) von dem Vorhaltemittel (450) auszulesen.

8. Ein Kraftfahrzeug, aufweisend eine Datensicherheitsvorrichtung (400) gemäß irgendeinem der vorhergehenden Ansprüche 5 bis 7.

9. Ein Computerprogramm für eine Datensicherheitsvorrichtung (400) gemäß irgendeinem der vorhergehenden Ansprüche 5 bis 7, welche nach einem Datensicherheitsverfahren gemäß irgendeinem der Ansprüche 1 bis 4 betreibbar ist.

10. Ein Datenträger aufweisend ein Computerprogramm gemäß Anspruch 9.

## Claims

1. A data security method for secure data use in a motor vehicle, the data security method comprising:
- reading in (10) a user authentication (100) of a motor vehicle user,
- checking (20) whether the user authentication (100) is valid,
wherein
- if the user authentication (100) is valid:
- obtaining (30) an encrypted personal data record (110) from a database (200) external to the motor vehicle by means of the user authentication (100), wherein the personal data record (110) is held ready in encrypted form in the database (200) external to the motorvehicle in such a way that it can be decrypted only on the basis of the valid user authentication (100),
- decrypting (40) the encrypted personal data record (110) on the basis of the valid user authentication (100),
- holding ready (50) the decrypted personal data record (110) in a device (300) of the motor vehicle,
- once use of the motor vehicle is ended by the motor vehicle user:
- reading out (60) a further personal data record (120) from the device (300) of the motor vehicle,
- encrypting (70) the further personal data record (120) on the basis of the valid user authentication (100), and
- transmitting (80) the encrypted further personal data record (120) to the database (200) external to the motor vehicle.

2. A data security method according to claim 1, wherein the encrypted personal data record (110) is decrypted (40) by means of a combination of the personal key and the user authentication (100).

3. A data security method according to any one of preceding claims 1 to 2, wherein the further personal data record (120) is encrypted (70) by means of a combination of the personal key and the user authentication (100).

4. A data security method according to any one of the preceding claims, wherein the personal data record (110) and the further personal data record (120) has at least one information item from a group of information items, and wherein the group of information items comprises:
- an electronic message information item,
- a navigation information item,
- a ticket information item,
- a multimedia information item.
- a notice information item,
- an application information item,
- an address book information item, and
- a personal information item relating to the motor vehicle user.

5. A data security device (400) for a motor vehicle, the data security device (400) comprising:
- a read-in means (410) for reading in (10) a user authentication (100) of a motor vehicle user,
- a checking means (420) for checking (20) whether the user authentication (100) is valid,
- a receiving device (430) for obtaining (30) an encrypted personal data record (110) from a database (200) external to the motor vehicle by means of the user authentication (100), wherein the personal data record (110) is held ready in encrypted form in the database (200) external to the motor vehicle in such a way that it can be decrypted only on the basis of the valid user authentication (100),
- a decryption means (440) for decrypting (40) the encrypted personal data record (110) on the basis of the valid user authentication (100),
- a read-out means (460) for reading out(60) a further personal data record (120),
- an encryption means (470) for encrypting (70) the further personal data record (120) on the basis of the valid user authentication (100), and
- a transmission device (480) for transmitting (80) the encrypted further personal data record (120) to the database (200) external to the motor vehicle, and
wherein the data security device (400) is designed to carry out a data security method according to any one of the preceding claims.

6. A data security device (400) according to claim 5, the data security device (400) also comprising:
- a transmission means (490) for transmitting the decrypted personal data record (110) to a device (300) of the motor vehicle, and
wherein the read-out means (460) is designed to read out the further personal data record (120) from the device (300) of the motorvehicle.

7. A data security device (400) according to claim 5 or 6, the data security device (400) also comprising:
- a hold-ready means (450) for holding ready (50) the decrypted personal data record (110), and
wherein the read-out means (460) are designed to read out the further personal data record (120) from the hold-ready means (450).

8. A motor vehicle, comprising a data security device (400) according to any one of preceding claims 5 to 7.

9. A computer program for a data security device (400) according to any one of preceding claims 5 to 7, which can be operated in accordance with a data security method according to any one of claims 1 to 4.

10. A data carrier comprising a computer program according to claim 9.

## Revendications

1. Procédé sécurisé de traitement de données pour utiliser en sécurité les données dans un véhicule automobile,
le procédé sécurisé consistant à :
- un entrer (10) une authentification d'utilisateur (100) d'un utilisateur de véhicule,
- vérifier (20) si l'authentification d'utilisateur (100) est valable,
selon lequel :
- si l'authentification d'utilisateur (100) est valable :
* recueillir (30) un jeu de données personnelles (110), cryptées à l'aide de l'authentification d'utilisateur (100) dans une banque de données (200) externe au véhicule,
** le jeu de données personnelles (110) étant réservé de façon cryptée dans la banque de données (200) externe au véhicule pour qu'il puisse être décrypté uniquement en se fondant sur l'authentification d'utilisateur (100) validée,
* décrypter (40) le jeu de données personnelles cryptées (110) en utilisant l'authentification d'utilisateur (100) validée,
* réserver (50) le jeu de données personnelles (110), décryptées dans un dispositif (300) du véhicule,
- à la fin d'une utilisation du véhicule par l'utilisateur :
* extraire (60) un autre jeu de données personnelles (120) du dispositif (300) du véhicule automobile,
* crypter (70) cet autre jeu de données personnelles (120) en se fondant sur l'authentification d'utilisateur (100) validée, et
* transmettre (80) cet autre jeu de données personnelles (120), cryptées à la banque de données (200) externe au véhicule.

2. Procédé sécurisé de traitement de données selon la revendication 1, selon lequel
le décryptage (40) du jeu de données personnelles (110) cryptées se fait à l'aide d'une combinaison de la clé personnelle et de l'authentification d'utilisateur (100).

3. Procédé sécurisé de traitement de données selon l'une quelconque des revendications 1 et 2,
selon lequel
le cryptage (70) de l'autre jeu de données personnelles (120) se fait à l'aide d'une combinaison de la clé personnelle et de l'authentification d'utilisateur (100).

4. Procédé sécurisé de traitement de données selon l'une quelconque des revendications précédentes,
selon lequel
le jeu de données personnelles (110) et l'autre jeu de données personnelles (120) comportent, au moins une information d'un groupe d'informations, et
le groupe d'informations comprend :
- une information de message électronique,
- une information navigation,
- une information ticket,
- une information multimédia,
- une information notice,
- une information d'application,
- une information d'agenda, et
- une information personnelle concernant l'utilisateur du véhicule.

5. Dispositif sécurisé de traitement de données (400) d'un véhicule, dispositif (400) comprenant :
- un moyen d'entrer (410) pour entrer (10) une authentification d'utilisateur (100) d'un utilisateur de véhicule,
- un moyen de vérification (420) pour vérifier (20) si l'authentification d'utilisateur (100) est valide,
- dispositif récepteur (430) pour recevoir (30) un jeu de données personnelles cryptées (110) à l'aide de l'authentification d'utilisateur (100), dans une banque de données (200) externe au véhicule,
* le jeu de données personnelles (110) étant réservé de manière cryptée dans la banque de données (200) externe au véhicule pour qu'il ne puisse être décrypté qu'à l'aide de l'authentification d'utilisateur (100) validée,
- un moyen de décryptage (440) pour décrypter (40) le jeu de données personnelles (110) cryptées en se fondant sur l'authentification d'utilisateur (100) validée,
- un moyen de lecture (460) pour extraire (60) un autre jeu de données personnelles (120),
- un moyen de cryptage (470) pour crypter (70) cet autre jeu de données personnelles (120) en se fondant sur l'authentification d'utilisateur (100) validée, et
- un dispositif émetteur (480) pour transmettre (80) cet autre jeu de données personnelles (120), cryptées à la banque de données (200) externe au véhicule,
- le dispositif sécurisé de traitement de données (400) étant conçu pour exécuter un procédé sécurisé de traitement de données selon l'une quelconque des revendications précédentes.

6. Dispositif sécurisé de traitement de données (400) selon la revendication 5,
ce dispositif sécurisé (400) comprend en outre :
- un moyen de transmission (490) pour transmettre le jeu de données personnelles (110) décryptées, et
- le moyen de lecture (460) étant conçu pour lire l'autre jeu de données personnelles (120) du dispositif (300) du véhicule.

7. Dispositif sécurisé de traitement de données (400) selon la revendication 5 ou 6,
dispositif sécurisé (400) comprend en outre :
- un moyen de réservation (450) pour réserver (50) le jeu de données personnelles décryptées (110), et
* le moyen de lecture (460) est conçu pour lire l'autre jeu de données personnelles (120) dans le moyen de réservation (450).

8. Véhicule automobile comportant un dispositif sécurisé de traitement de données (100) selon l'une quelconque des revendications 5 à 7.

9. Programme d'ordinateur pour un dispositif sécurisé de traitement de données (400) selon l'une quelconque des revendications précédentes 5 à 7, qui applique un procédé sécurisé de traitement de données selon l'une quelconque des revendications 1 à 4.

10. Support de données comportant un programme d'ordinateur selon la revendication 9.
